# EUROPEAN PATENT SPECIFICATION

(11) **EP 2 337 415 B1**
(45) Date of publication and mention of the grant of the patent: **21.08.2013**
(21) Application number: 10192439.7
(22) Date of filing: 24.11.2010
(51) Int. Cl.: H04W 72/08

(54) **Wireless base station and communication method**
Drahtlose Basisstation und Kommunikationsverfahren
Station de base sans fil et procédé de communication

(30) Priority: 16.12.2009 JP 2009285414
(43) Date of publication of application: 22.06.2011
(73) Proprietor: FUJITSU LIMITED, Kawasaki-shi, Kanagawa 211-8588 (JP)
(72) Inventor: Nunokawa, Kenichi, Kawasaki-shi Kanagawa 211-8588 (JP)
(74) Representative: Stebbing, Timothy Charles

(56) References cited:
- EP-A2- 1 257 137
- WO-A1-2009/055619
- US-A1- 2009 257 390
- "3RD GENERATION PARTNERSHIP PROJECT; TECHNICAL SPECIFICATION GROUP RADIO ACCESS NETWORKS; 3G HOME NODEB STUDY ITEM TECHNICAL REPORT (RELEASE 8)", 3GPP TR 25.820 V8.1.0,, vol. 25.820, no. V8.1.0, 1 May 2008 (2008-05-01), pages 1-37, XP002547670,
- NTT DOCOMO ET AL: "Enhanced Interference Management Mechanisms for HNB", 3GPP DRAFT; R3-092594, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 11 October 2009 (2009-10-11), XP050392076, [retrieved on 2009-10-15]
- CMCC: "On Frequency Configuration of HeNB/HNB", 3GPP DRAFT; R3-090935, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090326, 26 March 2009 (2009-03-26), XP050341302, [retrieved on 2009-03-26]

## Description

### FIELD

The present invention relates to a wireless base station for performing wireless communication with a wireless terminal, and a communication method in such a wireless base station.

### BACKGROUND

WO2009055619 A1 discloses a femto base station which monitors interference caused by an reverse link or up link communication of a cellular base station, sends an according indication to mobile station that causes the interference, and the mobile station forwards the interference indication to the cellular base station, which in response assigns the concerned resources to other terminals and assigns non-interference causing resources to the mobile terminal. 3GPP TR 25.820 V8.1.0 is a technical report of the study item on Home NodeB/eNodeB which describes several different interference scenarios involving the HNB and NB, and wherein the HNB shares a part of the frequency spectrum with the NB. EP1257137 A2 refers to a cordless cellular system, method and computer program product. A mobile station communicates with both a cellular network, by which it is assigned a mobile identification number, and to a cordless cellular base station utilizing the same cellular frequency range and communications protocol. The cordless cellular base station may be connected to a public switched telephone network.

As a wireless base station used in a wireless communication system such as a mobile phone system, there is suggested an extremely small wireless base station whose cover area (i.e. cell radius) is about several ten meters. Such a small wireless base station is referred to as a "Home Node B (or HNB)". A cell formed by such a small wireless base station is referred to as, for example, a "femto cell". The cell radius of the femto cell is extremely small, in comparison with a cell whose cell radius is about several km to 10km which is generally referred to as a "macro cell". The cell radius of the femto cell is extremely small, in comparison with a cell whose cell radius is about several hundred meters to 1km which is referred to as a "micro cell".

The small wireless base station (hereinafter referred to as the "HNB") is supposed to be disposed inside each user's home. In apartment buildings such as condominiums, another HNB is also supposed to be further disposed in a house adjacent to or close to a house where an HNB is disposed. In this case, the frequency used by the HNB disposed in the certain house likely interferes with the frequency used by the another HNB disposed in the adjacent house. The interference (i.e. radio interference) is unfavorable for preferable wireless communication, so it is desirable to limit or control the radio interference.

As a method of limiting or controlling the radio interference, there is listed a technology, as one example, in which, before the wireless communication is performed between a wireless terminal and the wireless base station, the mobile terminal itself sequentially notifies the wireless base station of the usage of the wireless resource of the surrounding other wireless base stations, and at the same time, the wireless base station uses a wireless resource other than the wireless resource used by the surrounding other wireless base stations.
Patent document 1: Japanese Patent Application Laid Open No. 2008-278265

### SUMMARY

However, the aforementioned technology provides the method of limiting or controlling the radio interference by an initial operation which is performed before the wireless terminal and the wireless base station actually perform the wireless communication. In other words, the aforementioned technology provides the method of limiting or controlling the radio interference in advance at an initial state in which the connection between the wireless terminal and the wireless base station has not been established. Therefore, the radio interference cannot be limited or controlled at the time point at which the wireless terminal and the wireless base station are actually performing the wireless communication.

The radio interference occurs in not only the HNB (i.e. the wireless base station that covers the femto cell) but also in various wireless base stations that cover the macro cell, the micro cell, and the like. Thus, even in the various wireless base stations that cover the macro cell, the micro cell, and the like, the radio interference cannot be limited or controlled at the time point at which the wireless terminal and the wireless base station are actually performing the wireless communication.

Embodiments of the present invention may provide a wireless base station and a communication method in which radio interference can be limited or controlled in a case where wireless communication is performed between a wireless base station and a wireless terminal.

According to an aspect of the embodiment, a wireless base station includes a detector and a transiting (transitioning) controller.

The detector detects radio interference between the wireless base station and another wireless base station. At this time, the detector may detect the radio interference between the wireless base station and the other wireless base station by directly detecting the degree of the radio interference received from the another wireless base station. Alternatively, the detector may detect the radio interference between the wireless base station and the another wireless base station by receiving a message related to the radio interference transmitted from a wireless terminal which performs wireless communication with the wireless base station. In other words, the detector may detect the radio interference in various ways.

The transiting controller transits (transitions, changes) a state of the wireless terminal, the wireless terminal performing the wireless communication with the wireless base station at the state, to a change state (changed state, different state), upon detecting the radio interference (i.e. upon detecting that the radio interference occurs between the wireless base station and the other wireless base station). The change state is a state in which a frequency used between the wireless base station and the wireless terminal is changed while a communication connection between the wireless base station and the wireless terminal is kept to be established (maintained). The change state is a cell paging channel state or a cell forward access channel state.

According to an another aspect of the embodiment, a communication method includes a detecting process and a transiting process. The detecting process detects radio interference between the wireless base station and another wireless base station. The transiting process transits a state of the wireless terminal, the wireless terminal performing a wireless communication with the wireless base station at the state, to a change state, upon detecting the radio interference (i.e. upon detecting that the radio interference occurs between the wireless base station and the other wireless base station). The change state is a state in which a frequency used between the wireless base station and the wireless terminal is changed while a communication connection between the wireless base station and the wireless terminal is kept to be established. The change state is a cell paging channel state or a cell forward access channel state.

### BRIEF DESCRIPTION OF THE DRAWINGS

FIG. 1 is a block diagram illustrating one example of the configuration of a wireless communication system in an embodiment;
FIG. 2 is a block diagram illustrating one example of the structure of a HNB;
FIG. 3 is a block diagram illustrating one example of the structure of an UE;
FIG. 4 is a flow chart illustrating a flow of operation of the wireless communication system in the embodiment;
FIG. 5 is a table illustrating one example of the data structure of measurement data indicating the degree of radio interference which results from another HNB measured by a radio interference measurement part;
FIG. 6 is a block diagram illustrating a configuration example in which the operation of the wireless communication system is performed; and
FIG. 7 is a sequence diagram illustrating a flow of operation of the wireless communication system.

### DESCRIPTION OF EMBODIMENT

Hereinafter, the embodiment will be explained with reference to the drawings.

### (1) System Configuration Diagram

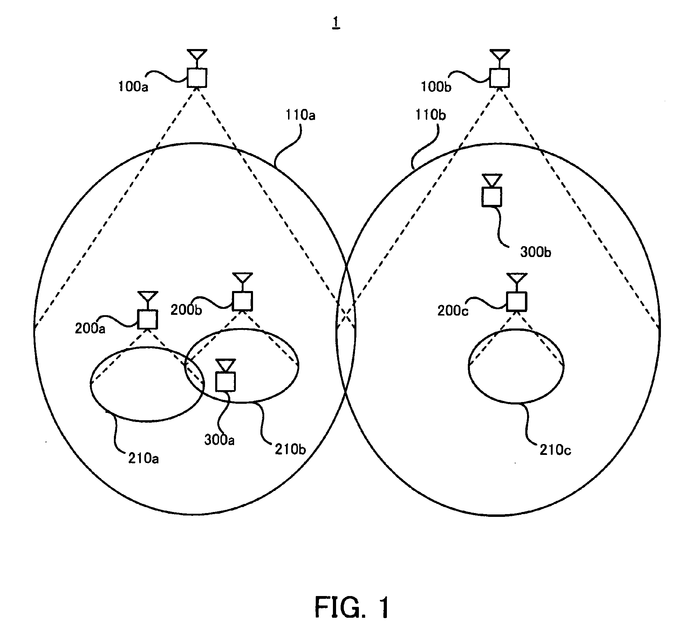

With reference to FIG. 1, the configuration of a wireless communication system 1 in this embodiment will be explained. FIG. 1 is a block diagram illustrating one example of the configuration of the wireless communication system 1 in the embodiment.

As illustrated in FIG. 1, the wireless communication system 1 in the embodiment includes an NB (Node B) 100a, an NB 100b, a HNB (Home NodeB) 200a, a HNB 200b, a HNB 200c, a UE (User Equipment) 300a, and a UE 300b. Incidentally, the number of the NBs, the number of the HNBs, and the number of the UEs illustrated in FIG. 1 are one example. The number of the NBs, the number of the HNBs, and the number of the UEs are not limited to the number illustrated in FIG. 1. Moreover, hereinafter, for convenience of explanation, if the explanation is given without distinction between the NB 100a and the NB 100b, they are collectively referred to as a "NB 100" during the explanation. In the same manner, if the explanation is given without distinction among the HNB 200a, the HNB 200b, and the HNB 200c, they are collectively referred to as a "HNB 200" during the explanation. In the same manner, if the explanation is given without distinction between the UE 300a and the UE 300b, they are collectively referred to as a "UE 300" during the explanation.

The NB 100 is a wireless base station (i.e. a macro wireless base station) which covers a macro cell 110 whose cell radius is about several km to dozen km or several tens km. For example, in the example illustrated in FIG. 1, the NB 100a is a wireless base station which covers a macro cell 110a, and the NB 100b is a wireless base station which covers a macro cell 110b. The NB 100 performs wireless communication with the UE 300 located in the macro cell 110 covered by the NB 100. In other words, the NB 100 establishes a communication connection with the UE 300 located in the macro cell 110 covered by the NB 100, and the NB 100 transmits or receives data to or from the UE 300. Moreover, the macro cell 110 covered by each NB 100 may be constructed such that a part of the macro cell 110 overlaps a part or all of another macro cell 110 or such that all of the macro cell 110 does not overlap another macro cell 110. In the example illustrated in FIG. 1, a part of the macro cell 110a overlaps a part of the macro cell 110b which is adjacent to the macro cell 110a.

The HNB 200 is a wireless base station (i.e. a home wireless base station) which covers a femto cell 210 whose cell radius is about several meters to dozen meters or several tens meters. For example, in the example illustrated in FIG. 1, the HNB 200a is a wireless base station which covers a femto cell 210a, the HNB 200b is a wireless base station which covers a femto cell 210b, and the HNB 200c is a wireless base station which covers a femto cell 210c. The HNB 200 performs the wireless communication with the UE 300 located in the femto cell 210 covered by the HNB 200. In other words, the HNB 200 establishes the communication connection with the UE 300 located in the femto cell 210 covered by the HNB 200, and the HNB 200 actually performs the wireless communication. Moreover, the femto cell 210 covered by each HNB 200 may be constructed such that a part of the femto cell 210 overlaps a part or all of another femto cell 210 or such that all of the femto cell 210 does not overlap another femto cell 210. Moreover, the femto cell 210 covered by each HNB 200 may be constructed such that a part of the femto cell 210 overlaps a part or all of the macro cell 110 or such that all of the femto cell 210 does not overlap the macro cell 110. In the example illustrated in FIG. 1, all of each of the femto cell 210a and the femto cell 210b overlaps the macro cell 110a, all of the femto cell 210c overlaps the macro cell 110b, and a part of the femto cell 210a overlaps a part of the femto cell 210b which is adjacent to the femto cell 210a.

The UE 300 is a wireless terminal which establishes the communication connection with the NB 100 corresponding to the macro cell 110 in which the UE 300 is located. The UE 300 transmits or receives the data with the NB 100 corresponding to the macro cell 110 in which the UE 300 is located. Moreover, the UE 300 is a wireless terminal which establishes the communication connection with the HNB 200 corresponding to the femto cell 210 in which the UE 300 is located. The UE 300 transmits or receives the data with the HNB 200 corresponding to the femto cell 210 in which the UE 300 is located. The UE 300 can use various services or applications (e.g. a mail service, a voice communication service, a WEB browsing service, a packet communication service, and the like) via the NB 100 and the HNB 200 (moreover, via a not-illustrated upper station or the like which is superior to and which is connected to the NB 100 and the HNB 200). As the UE 300, there are listed, for example, a cell phone, a personal digital assistant (PDA), and other various information devices including a wireless communication function, as one example. In other words, as the wireless communication system 1 in the embodiment, for example, a cell phone system, a mobile communication system, and the like are listed as one example.

Incidentally, the example illustrated in FIG. 1 exemplifies the NB 100 which covers the macro cell 110 whose cell radius is about several km to dozen km or several tens km and the HNB 200 which covers the femto cell 210 whose cell radius of about several meters to dozen meters or several tens meters. However, a wireless base station which covers a micro cell whose cell radius is about several hundred meters to 1 km may be disposed in addition to the NB 100 and the HNB 200. Moreover, there may be disposed various wireless base stations which cover the cell whose cell radius is a size other than the aforementioned size.

### (2) Block Diagram

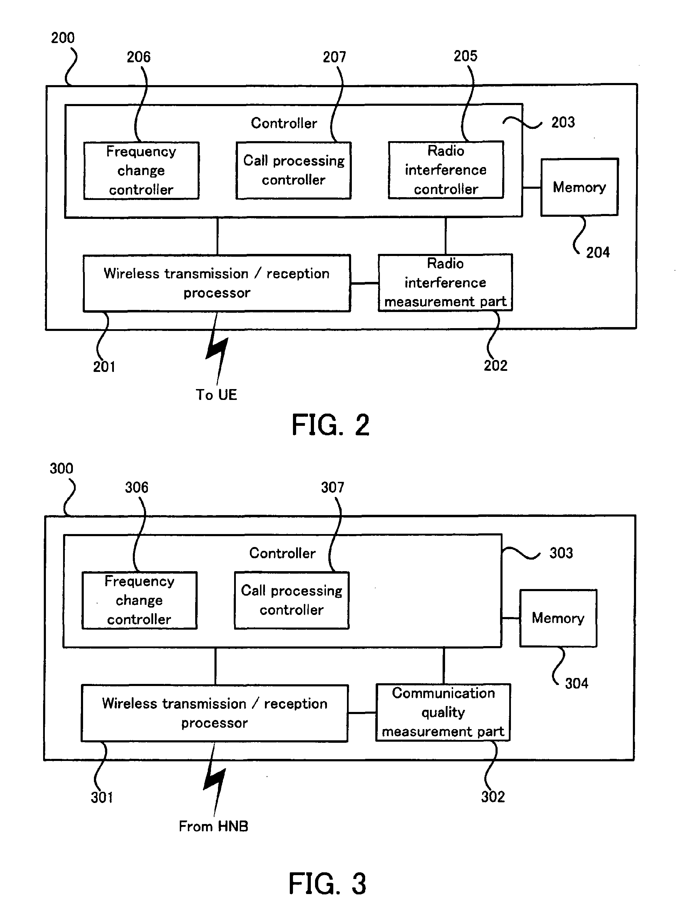

With reference to FIG. 2 and FIG. 3, an explanation will be given on the structure of each of the HNB 200 and the UE 300 included in the wireless communication system 1 in the embodiment.

### (2-1) Block Diagram of HNB 200

With reference to FIG. 2, the structure of the HNB 200 will be explained. FIG. 2 is a block diagram illustrating one example of the structure of the HNB 200.

As illustrated in FIG. 2, the HNB 200 includes a wireless transmission / reception processor 201, a radio interference measurement part 202, a controller 203, and a memory 204.

The wireless transmission / reception processor 201 transmits data generated on the controller 203 or the like, to the UE 300. Moreover, the wireless transmission / reception processor 201 receives data transmitted from the UE 300. Thus, the wireless transmission / reception processor 201 may include: a baseband processing circuit for performing a baseband process including a data coding process (e.g. error correction coding process using a convolutional code, a turbo code, or the like) and a data decoding process or the like; a modulation circuit for performing a modulation process such as QPSK modulation and 16QAM modulation; a demodulation circuit for performing a demodulation process; a RF circuit for adjusting a transmission power or a reception power; an antenna for transmitting or receiving radio waves or electric waves; and the like.

The radio interference measurement part 202 constitutes one example of the "detector". The radio interference measurement part 202 measures the degree of radio interference which results from another HNB 200. More specifically, the radio interference measurement part 202 regularly or irregularly measures radio-field intensity (in other words, an interference power value) emitted from another HNB 200. Thus, the wireless transmission / reception processor 201 is preferably adapted to receive wireless radio waves emitted from another HNB 200.

The controller 203 controls all the operations of the HNB 200. As the controller 203, for example, a CPU (Central Processor Unit) or the like which operates on the basis of predetermined firmware is listed as one example.

The controller 203 includes a radio interference controller 205, a frequency change controller 206, and a call processing controller 207. Such a processing block may be realized, for example, as the operations of a partial program of the firmware which defines the operations of the controller 203. Such a processing block may be realized as the operations of a program independent of the firmware. Alternatively, the radio interference controller 205, the frequency change controller 206, and the call processing controller 207 may be realized as one circuit independent of the controller 203.

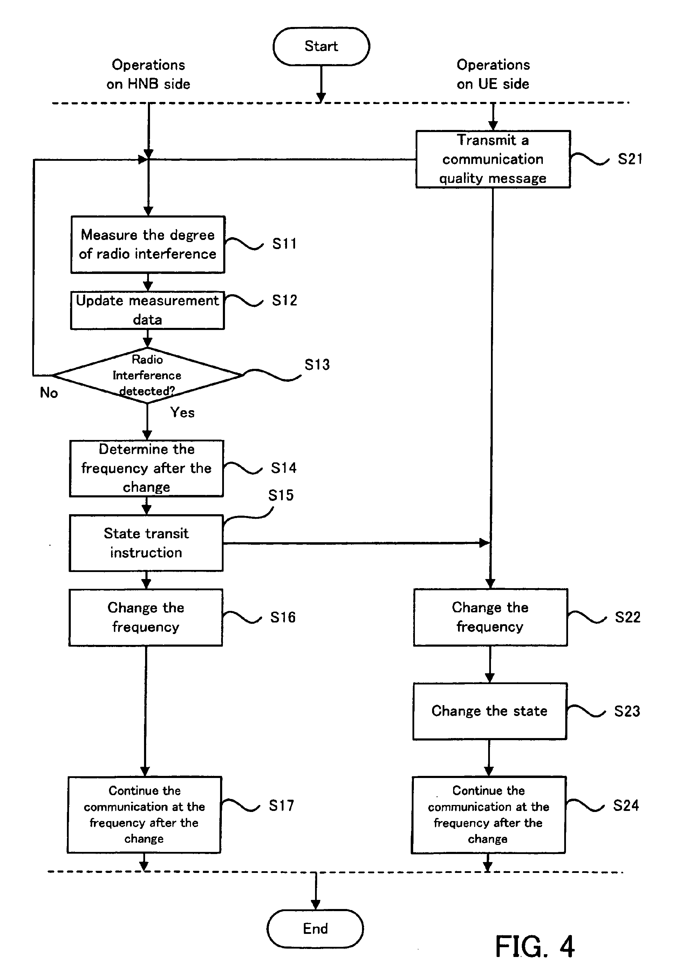

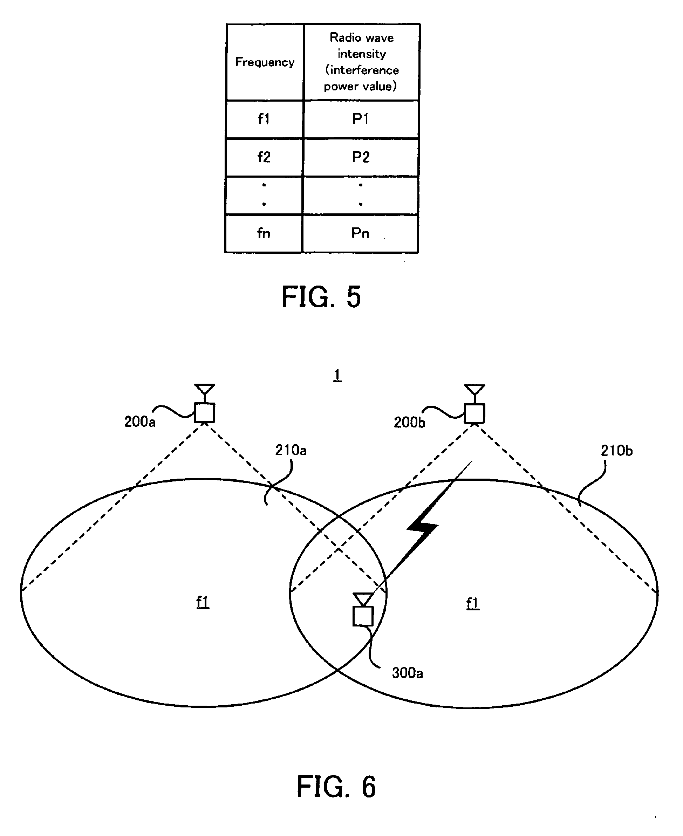

The radio interference controller 205 constitutes one example of the "detector". The radio interference controller 205 judges whether or not the radio interference occurs between the HNB 200 and another HNB 200 on the basis of a measurement result measured by the radio interference measurement part 202. Moreover, if the radio interference controller 205 judges that the radio interference occurs between the HNB 200 and another HNB 200, the radio interference controller 205 transmits a message indicating the occurrence of the radio interference to each of the frequency change controller 206 and the call processing controller 207. Incidentally, the operation of judging whether or not the radio interference occurs will be detailed later (refer to FIG. 4 and FIG. 5 or the like).

Incidentally, in addition to or instead of judging whether or not the radio interference occurs between the HNB 200 and another HNB 200, the radio interference controller 205 may also judge whether or not the radio interference occurs between the HNB 200 and the NB 100. If the radio interference controller 205 judges whether or not the radio interference occurs between the HNB 200 and the NB 100, the radio interference measurement part 202 preferably measures the degree of the radio interference which results from the NB 100, in addition to or instead of measuring the degree of the radio interference which results from another HNB 200.

The frequency change controller 206 determines a frequency used by the HNB 200. If the radio interference controller 205 judges that the radio interference occurs, the frequency change controller 206 determines a frequency after the change and frequency change timing in order to change the frequency used by the HNB 200. Moreover, the frequency change controller 206 notifies the call processing controller 207 of each of the frequency after the change and the frequency change timing.

The call processing controller 207 constitutes one example of the "transiting controller". The call processing controller 207 controls the general call processing between the HNB 200 and the UE 300. If the radio interference controller 205 judges that the radio interference occurs, the call processing controller 207 transmits a message, which is a message for transiting the state of the UE 300 to a CELL_PCH (Cell Paging Channel) state or a CELL_FACH (Cell Forward Access Channel) state described later, to the UE 300 via the wireless transmission / reception processor 201. At this time, the call processing controller 207 may embed the frequency after the change and the frequency change timing determined on the frequency change controller 206, in the message transmitted to the UE 300.

The memory 204 includes a memory area for temporarily storing the data used within the HNB 200. Moreover, the memory 204 may include a memory area or the like in which a program for performing the operations as the HNB 200 (i.e. firmware) is stored. As the memory 204, a semiconductor memory such as a RAM (Random Access Memory) and other various recording media are listed as one example.

### (2-2) Block Diagram of UE 300

With reference to FIG. 3, the structure of the UE 300 will be explained. FIG. 3 is a block diagram illustrating one example of the structure of the UE 300.

As illustrated in FIG. 3, the UE 300 includes a wireless transmission / reception processor 301, a communication quality measurement part 302, a controller 303, and a memory 304.

The wireless transmission / reception processor 301 has the same structure as that of the wireless transmission / reception processor 201 described above. The wireless transmission / reception processor 301 transmits data generated on the controller 303 or the like, to the NB 100 or the HNB 200. The wireless transmission / reception processor 301 receives data transmitted from the NB 100 or the HNB 200. Thus, the wireless transmission / reception processor 301 includes, as in the aforementioned wireless transmission / reception processor 201: a baseband processing circuit; a modulation circuit; a demodulation circuit; a RF circuit; an antenna; and the like.

The communication quality measurement part 302 measures wireless communication quality between the UE 300 and the HNB 200.

The controller 303 controls all the operations of the UE 300. As the controller 303, for example, a CPU or the like which operates on the basis of predetermined firmware is listed as one example.

The controller 303 includes a frequency change controller 306 and a call processing controller 307. Such a processing block may be realized, for example, as the operations of a partial program of the firmware which defines the operations of the controller 303. Such a processing block may be realized as the operations of a program independent of the firmware. Alternatively, the frequency change controller 306 and the call processing controller 307 may be realized as one circuit independent of the controller 303.

The frequency change controller 306 determines a frequency used by the UE 300. If a message for changing the frequency (i.e. the message including the frequency after the change and the frequency change timing described above) is transmitted from the HNB 200, the frequency change controller 306 determines the frequency after the change included in the message, as the frequency used by the UE 300.

The call processing controller 307 controls the general call processing between the HNB 200 and the UE 300 and the general call processing between the NB 100 and the UE 300. If the call processing controller 307 receives the message for transiting the state of the UE 300 to the CELL_PCH state or the CELL_FACH state, from the HNB 200, then, the call processing controller 307 controls the UE 300 to transit the state of the UE 300 to the CELL_PCH state or the CELL_FACH state. In addition, the call processing controller 307 notifies the frequency change controller 306 of the frequency after the change and the frequency change timing included in the message.

The memory 304 includes a memory area for temporarily storing the data used within the UE 300. Moreover, the memory 304 may include a memory area or the like in which a program for performing the operations as the UE 300 (i.e. firmware) is stored. As the memory 304, a semiconductor memory such as a RAM (Random Access Memory) and other various recording media are listed as one example.

### (3) Explanation of Operation

With reference to FIG. 4, a flow of operation of the wireless communication system 1 in the embodiment will be explained. FIG. 4 is a flow chart illustrating a flow of operation of the wireless communication system 1 in the embodiment.

Here, an explanation will be given on a flow of operation performed by one HNB 200 in a case where (i) the one HNB 200 (e.g. the HNB 200b) judges whether or not the radio interference occurs between the one HNB 200 and another HNB 200 (e.g. the HNB 200a) and the one HNB 200 actually judges that the radio interference occurs between the one HNB 200 and another HNB 200. Moreover, hereinafter, an explanation will be given on an example in a case where the wireless communication system 1 complies with the 3G (3rd Generation: a third mobile communication system, in other words, UMTS (Universal Mobile Telecommunication System)) standard and packet communication is performed between the HNB 200 and the UE 300.

As illustrated in FIG. 4, the radio interference measurement part 202 included in the HNB 200 regularly or irregularly measures the degree of the radio interference which results from another HNB 200 (e.g. radio field intensity of another HNB 200) (step S11). Measurement data (i.e. a measurement result) indicating the degree of the radio interference which results from another HNB 200 is stored into the memory 204 by the operation of the radio interference measurement part 202 (step S12). Incidentally, the measurement data indicating the degree of the radio interference which results from another HNB 200 may be directly transferred to the radio interference controller 205, by the operation of the radio interference measurement part 202. Incidentally, due to the sequential measurement of the degree of the radio interference which results from another HNB 200, the measurement data stored in the memory 204 is updated at each measurement of the degree of the radio interference (the step S12).

Now, with reference to FIG. 5, an explanation will be given on one example of the measurement data indicating the degree of the radio interference which results from another HNB 200 measured by the radio interference measurement part 202. FIG. 5 is a table illustrating one example of the data structure of the measurement data indicating the degree of the radio interference which results from another HNB 200 measured by the radio interference measurement part 202.

As illustrated in FIG. 5, the measurement data has a database structure in which frequency f is associated with radio wave intensity (interference power value) P. More specifically, the measurement data has a database structure in which frequency f (f1, f2, ..., fn) whose radio wave intensity is measured by the radio interference measurement part 202 is associated with the measured radio wave intensity P (P1, P2, ..., Pn) at each frequency f.

In FIG. 4 again, then, the radio interference controller 205 included in the HNB 200 judges whether or not the radio interference which results from another HNB 200 occurs on the basis of the measurement data indicating the degree of the radio interference which results from another HNB 200 measured by the radio interference measurement part 202 (step S 13). Specifically, for example, the radio interference controller 205 may judge that the radio interference which results from another HNB 200 occurs if the radio wave intensity corresponding to the frequency used by the HNB 200 (i.e. the radio wave intensity in the measurement data) exceeds a predetermined threshold value. More specifically, if the HNB 200 uses the frequency f1, the radio interference controller 205 may judge that the radio interference with the other HNB 200 occurs when the radio wave intensity P1 of the frequency f1 included in the measurement data exceeds a predetermined threshold value.

The above explanation states such a operation that the HNB 200 judges whether or not the radio interference which results from another HNB 200 occurs, on the basis of the radio wave intensity of the frequency used by another HNB 200 which is directly measured by the HNB 200. However, the HNB 200 may judge whether or not the radio interference which results from another HNB 200 occurs, on the basis of a message given from the UE 300 to the HNB 200. The operations in this case will be explained below.

Firstly, a message related to the radio interference is transmitted from the UE 300 to the HNB 200 (step S21). For example, if the deterioration of the wireless communication quality is detected by the operation of the communication quality measurement part 302 included in the UE 300, a message indicating the deterioration of the wireless communication quality (a communication quality message) is transmitted to the HNB 200 by the operation of the call processing controller 307 included in the UE 300.

If the message related to the radio interference is received by the HNB 200, the HNB 200 performs the operations of the step S11 and the step S12. By this, the measurement data stored in the memory 204 of the HNB 200 is updated. Then, the radio interference controller 205 included in the HNB 200 judges whether or not the radio interference which results from another HNB 200 occurs on the basis of the updated measurement data (the step S13). In this case, the HNB 200 may not regularly measure the degree of the ratio interference which results from another HNB 200 (e.g. the radio wave intensity of another HNB 200). Therefore, it is possible to reduce the processing load of the HNB 200.

Incidentally, both of the operation of judging whether or not the radio interference occurs on the basis of the radio wave intensity of the frequency used by another HNB 200 which is directly measured by the HNB 200 and the operation of judging whether or not the radio interference occurs on the basis of the message given from the UE 300 to the HNB 200 may not be performed at the same time. For example, while the operation of judging whether or not the radio interference occurs on the basis of the radio wave intensity of the frequency used by another HNB 200 which is directly measured by the HNB 200 may be performed, the operation of judging whether or not the radio interference occurs on the basis of the message given from the UE 300 to the HNB 200 may not be performed. In this case, the UE 300 may not include the communication quality measurement part 302. In the same manner, while the operation of judging whether or not the radio interference occurs on the basis of the radio wave intensity of the frequency used by another HNB 200 which is directly measured by the HNB 200 may not be performed, the operation of judging whether or not the radio interference occurs on the basis of the message given from the UE 300 to the HNB 200 may be performed.

There may be a plurality of UEs 300 in the femto cell 210 covered by one HNB 200. Therefore, the HNB 200 may receive the messages related to the radio interference from the plurality of UEs 300 at the same time or in tandem. In this case, after receiving the messages related to the radio interference from the plurality of UEs 300 at the same time or in tandem, the HNB 200 may not perform the measurement of the degree of the radio interference which results from another HNB 200 (the step S11) and the updating of the measurement data (the step S12). In other words, after receiving the messages related to the radio interference from the plurality of UEs 300 at the same time or in tandem, the HNB 200 may judge whether or not the radio interference which results from another HNB 200 occurs on the basis of the previously measured measurement data. By virtue of such construction, while preferably judging whether or not the radio interference occurs, it is possible to reduce the processing load in the HNB 200 associated with the omission of the measurement operation.

Moreover, even if the measurement of the degree of the radio interference which results from another HNB 200 (the step S11) and the updating of the measurement data (the step S12) require a relatively more time, the HNB 200 may not perform the measurement of the degree of the radio interference which results from another HNB 200 (the step S11) and the updating of the measurement data (the step S12). In other words, if it is predicted that the measurement of the degree of the radio interference which results from another HNB 200 (the step S11) and the updating of the measurement data (the step S12) require a relatively more time, the HNB 200 may judge whether or not the radio interference which results from another HNB 200 occurs on the basis of the previously measured measurement data. By virtue of such construction, it is possible to reduce the processing load in the HNB 200 associated with the omission of the measurement operation.

As a result of the judgment in the step S 13, if it is judged that the radio interference which results from another HNB 200 does not occur (the step S13: No), the operational flow returns to the step S11 again, and the operation of judging whether or not the radio interference occurs is continued.

On the other hand, as a result of the judgment in the step S13, if it is judged that the radio interference which results from another HNB 200 occurs (the step S13: Yes), the frequency change controller 206 included in the HNB 200 determines to change the frequency used by the HNB 200 (step S14). At this time, the frequency change controller 206 determines the frequency after the change on the basis of the measurement data stored in the memory 204. For example, the frequency change controller 206 determines a frequency whose radio wave interference is relatively small (e.g. smallest), as the frequency after the change. At the same time, the frequency change controller 206 determines the frequency change timing.

Then, the call processing controller 207 included in the HNB 200 performs control for transiting (altering or switching) the state of the UE 300 which performs the packet communication with the HNB 200 (in other words, the state of the packet communication performed between the HNB 200 and the UE 300) to the CELL_PCH state or the CELL_FACH state (step S15). More specifically, the call processing controller 207 transmits a RRC (Radio Resource Control): PHYSICAL CHANNEL RECONFIGURATION message, which includes an instruction to transit the state of the UE 300 to the CELL_PCH state or the CELL_FACH state, to the UE 300. At this time, the call processing controller 207 adds information, which indicates each of the frequency after the change and the frequency change timing determined in the step S14, into the RRC: PHYSICAL CHANNEL RECONFIGURATION message. In other words, the call processing controller 207 transmits the RRC: PHYSICAL CHANNEL RECONFIGURATION message for specifying the frequency after the change and the frequency change timing, to the UE 300, thereby transiting the state of the UE 300 to the CELL_PCH state or the CELL_FACH state. Incidentally, the information indicating the frequency after the change is added into an "IE: Frequency info" field included in the RRC: PHYSICAL CHANNEL RECONFIGURATION message. Moreover, the frequency change timing is added into an "IE: Activation time" field included in the RRC: PHYSICAL CHANNEL RECONFIGURATION message.

Then, the frequency change controller 206 included in the HNB 200 changes the frequency used by the HNB 200 to the frequency after the change, in the timing determined in the step S14 (step S16). Then, the HNB 200 continues the packet communication with the UE 300 by using the frequency after the change (step S 17).

On the other hand, the call processing controller 307 included in the UE 300, which receives the RRC: PHYSICAL CHANNEL RECONFIGURATION message, transmits a RRC: PHYSICAL CHANNEL RECONFIGURATION COMPLETE message for confirming the reception of the RRC: PHYSICAL CHANNEL RECONFIGURATION message, to the HNB 200. Then, the frequency change controller 306 included in the UE 300 changes the frequency used by the UE 300 to the frequency after the change, in the timing determined in the step S14 (step S22). In other words, the frequency change controller 306 changes the frequency used by the UE 300, to the frequency included in the RRC: PHYSICAL CHANNEL RECONFIGURATION message, in the timing included in the RRC: PHYSICAL CHANNEL RECONFIGURATION message. At the same time, the call processing controller 307 included in the UE 300 transmits a RRC: CELL UPDATE message to the HNB 200 by using the frequency after the change. Then, the call processing controller 307 included in the UE 300 receives a RRC: CELL UPDATE CONFIRM message, which is a response message to the RRC: CELL UPDATE message, from the HNB 200. As a result, the UE 300 changes the state of the UE 300 to the CELL_PCH state or the CELL_FACH state (step S23) and continues the packet communication with the HNB 200 (step S24).

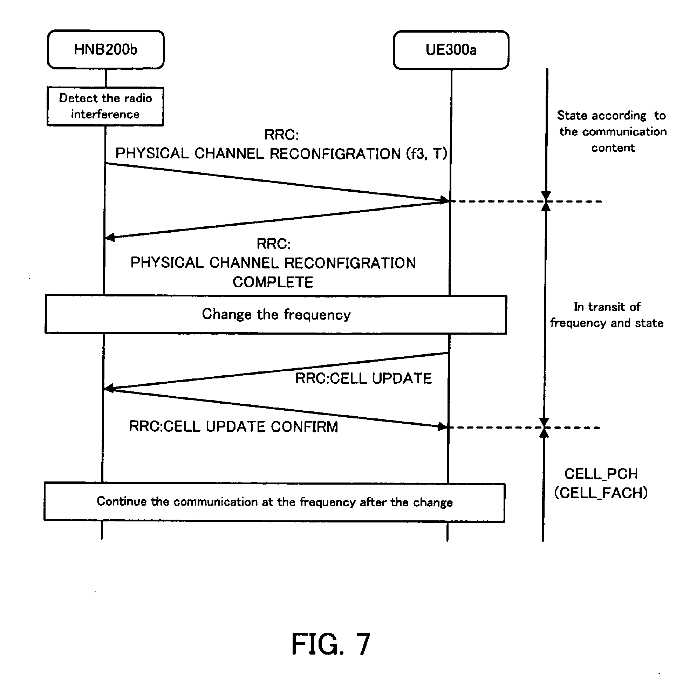

The operation of the wireless communication system 1 will be explained, more specifically, with reference to FIG. 6 and FIG. 7. FIG. 6 is a block diagram illustrating a configuration example in which the operation of the wireless communication system 1 is performed. FIG. 7 is a sequence diagram illustrating a flow of operation of the wireless communication system 1.

As illustrated in FIG. 6, the following explanation is about an example in which (i) a part of the femto cell 210a covered by the HNB 200a overlaps a part of the femto cell 210b covered by the HNB 200b, (ii) the UE 300a is disposed at a position where a part of the femto cell 210a covered by the HNB 200a overlaps a part of the femto cell 210b covered by the HNB 200b, (iii) both the HNB 200a and the HNB 200b use the frequency f1, and (iv) the UE 300a performs the packet communication with the HNB 200b by using the frequency f1.

As illustrated in FIG. 7, the HNB 200b judges that the radio interference which results from the HNB 200a occurs. Here, it is assumed that the HNB 200b determines to change the frequency used by the HNB 200b from the frequency f1 at which the radio interference occurs to the frequency f3 at which the radio interference is less or does not occur. In this case, the HNB 200b transmits the RRC: PHYSICAL CHANNEL RECONFIGURATION message including the frequency f3 after the change and timing T for changing to the frequency f3, to the UE 300a which performs the packet communication with the HNB 200b.

The UE 300a, which receives the RRC: PHYSICAL CHANNEL RECONFIGURATION message, transmits the RRC: PHYSICAL CHANNEL RECONFIGURATION COMPLETE message as the response message to the HNB 200b. Then, the UE 300a changes the frequency used by the UE 300a from the frequency f1 before the change to the frequency f3 after the change, in the timing T specified by the RRC: PHYSICAL CHANNEL RECONFIGURATION message. At the same time of or after the change of the frequency, the UE 300a transmits the RRC: CELL UPDATE message to the HNB 200b. The HNB 200b, which receives the RRC: CELL UPDATE message, transmits the RRC: CELL UPDATE CONFIRM message to the UE 300a as the response message. Then, the UE 300a, which receives the RRC: CELL UPDATE CONFIRM message, transits the state of the UE 300a to the CELL_PCH state or the CELL_FACH state.

Then, the HNB 200b and the UE 300a continue the packet communication by using the frequency f3 after the change. Therefore, it is possible to perform the preferable packet communication without an influence of the radio interference which occurs due to the use of the frequency f1.

Incidentally, after that, the state of the UE 300 may be returned to the state corresponding to the communication content again, depending on the data amount in the packet communication. For example, if the packets transmitted to the HNB 200 from the UE 300 have a relatively large data amount, the state may be transited to a state in which a desired communication rate can be realized, by transmitting the RRC: CELL UPDATE message (CELL_PCH state) or a RRC: MEASUREMENT REPORT message (CELL_FACH state) from the UE 300. Alternatively, if the packets transmitted to the UE 300 from the HNB 200 have a relatively large data amount, the state may be transited to a state in which a desired communication rate can be realized, by transmitting the RRC: PHYSICAL CHANNEL RECONFIGURATION message.

As explained above, according to the wireless communication system 1 in the embodiment, if the radio interference is detected, the state of the UE 300 which performs the packet communication with the HNB 200 (in other words, the state of the packet communication between the HNB 200 and the UE 300) is transited to the CELL_PCH state or the CELL_FACH state. Thus, if the radio interference is detected, it is possible to change the frequency used for the packet communication between the HNB 200 and the UE 300 while the communication connection between the HNB 200 and the UE 300 is kept to be established. Thus, even if the HNB 200 and the UE 300 perform the packet communication, it is possible to preferably limit or control an adverse influence of the radio interference while the communication connection is kept to be established.

Moreover, according to the wireless communication system 1 in the embodiment, it is possible to perform a countermeasure for limiting or controlling the adverse influence of the radio interference while the communication connection between the HNB 200 and the UE 300 is kept to be established. In other words, according to the wireless communication system 1 in the embodiment, it is possible to perform the countermeasure for limiting or controlling the adverse influence of the radio interference without breaking the communication connection between the HNB 200 and the UE 300. Thus, it may not be necessary to perform an initial operation, which may be required for the establishment of the communication connection, every time the countermeasure for limiting or controlling the adverse influence of the radio interference is performed. Therefore, in comparison with the HNB which performs the countermeasure for limiting or controlling the adverse influence of the radio interference after temporarily breaking the communication connection between the HNB 200 and the UE 300, it is possible to reduce the processing load or proceeding time required for an operation of limiting or controlling the radio interference.

Moreover, according to the wireless communication system 1 in the embodiment, as the countermeasure for limiting or controlling the adverse influence of the radio interference, the frequency to be used is changed. Thus, it is possible to surely perform the countermeasure for limiting or controlling the adverse influence. Incidentally, it is obvious that the adverse influence of the radio interference may be limited or controlled by a countermeasure other than the countermeasure of changing the frequency to be used.

Moreover, according to the wireless communication system 1 in the embodiment, the aforementioned configuration can be realized by using the standardized message (i.e. RRC: PHYSICAL CHANNEL RECONFIGURATION message) and the standardized state (i.e. the CELL_PCH state or the CELL_FACH state) both of which comply with the 3G standard. Thus, the aforementioned configuration can be realized with little or no change of the physical structure of the HNB 200 and the UE 300. Therefore, it is possible to apply the aforementioned wireless communication system 1 to the existing wireless communication system 1, relatively easily.

Moreover, according to the wireless communication system 1 in the embodiment, the RRC: PHYSICAL CHANNEL RECONFIGURATION message includes the frequency after the change and the frequency change timing. Thus, in both the HNB 200 and the UE 300, it is possible to change the frequency to be used in synchronization (in other words, at the same time). In other words, it is possible to limit or control the occurrence of a temporal shift in changing the frequency between the HNB 200 and the UE 300. In addition, it is possible to limit or control the occurrence of a shift in the frequency itself between the HNB 200 and the UE 300. Therefore, it is possible to preferably prevent a disconnection of the packet communication, which may result from the temporal shift in changing the frequency and the shift in the frequency itself, between the HNB 200 and the UE 300.

Incidentally, the aforementioned explanation is about the wireless communication system 1 which complies with the 3G standard. However, even in the wireless communication system which complies with a standard other than the 3G standard, the aforementioned various effects can be received by transiting the state of the UE 300 to a state which is substantially same as the CELL_PCH state or the CELL_FACH state in the 3G standard. Alternatively, the aforementioned various effects can be received by performing an operation which provides the same result as that of the operation of transiting the state of the UE 300 to the state which is substantially same as the CELL_PCH state or the CELL_FACH state in the 3G standard. In other words, even in an arbitrary wireless communication system, the aforementioned various effects can be received by transiting the state of the UE 300 to a state in which the frequency is changed while the communication connection between the HNB 200 and the UE 300 is kept to be established if the radio interference is detected (or by changing the frequency to be used if the radio interference is detected).

Moreover, the aforementioned explanation is about the structure and operations of the HNB 200. However, the structure and operations of the HNB 200 can be applied to the NB 100 and other various wireless base stations. In other words, the NB 100 and the other various wireless base stations may be constructed to have the same structure as that of the HNB 200 and to perform the same operations as those of the HNB 200. By virtue of such construction, even if not only the HNB 200 but also the NB 100 and the other various wireless base stations perform the packet communication with the UE 300, it is possible to preferably limit or control the adverse influence by the occurrence of the radio interference.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the scope of the invention.

## Claims

1. A wireless base station (200) for performing wireless communication with a wireless terminal (300),
the wireless base station (200) comprising:
a detector (202) for detecting radio interference between the wireless base station (200a) and another wireless base station (200b); and
**characterized in that**
the wireless base station (200) further comprises:
a transiting controller (203) for transiting a state of the wireless terminal (300), the wireless terminal (300) performing the wireless communication with the wireless base station (200) at the state, to a change state in which a frequency used between the wireless base station (200) and the wireless terminal (300) is changed while a communication connection between the wireless base station (200) and the wireless terminal (300) is kept to be established, upon detecting the radio interference, wherein the change state is a Cell Paging Channel state or a Cell Forward Access Channel state.

2. The wireless base station (200) according to claim 1, wherein
the transiting controller (203) is further adapted for transiting the state of the wireless terminal (300), the wireless terminal (300) performing the wireless communication with the wireless base station (200) at the state, to the change state, by transmitting a Radio Resource Control: Physical Channel Reconfiguration message to the wireless terminal (300).

3. The wireless base station (200) according to claim 2, wherein
the transiting controller (203) is further adapted for transmitting the Radio Resource Control message including change information, the change information indicating at least one of a frequency after change and change timing of the frequency, to the wireless terminal (300).

4. A communication method in a wireless base station (200) for performing wireless communication with a wireless terminal (300),
the communication method comprising:
a detecting process of detecting radio interference between the wireless base station (200a) and another wireless base station (200b); and
**characterized in that**
the communication method further comprises:
a transiting process of transiting a state of the wireless terminal (300), the wireless terminal (300) performing the wireless communication with the wireless base station (200) at the state, to a change state in which a frequency used between the wireless base station (200) and the wireless terminal (300) is changed while a communication connection between the wireless base station (200) and the wireless terminal (300) is kept to be established, upon detecting the radio interference, wherein the change state is a Cell Paging Channel state or a Cell Forward Access Channel state.

5. A wireless communication system (1) comprising a wireless base station (200) according to any of claims 1 to 3 for performing wireless communication with a wireless terminal (300).

## Patentansprüche

1. Drahtlos-Basisstation (200) zum Ausführen einer Drahtloskommunikation mit einem Drahtlos-Endgerät (300), wobei die Drahtlos-Basisstation (200) Folgendes umfasst:
einen Detektor (202) zum Detektieren einer Funkstörung zwischen der Drahtlos-Basisstation (200a) und einer anderen Drahtlos-Basisstation (200b); und
**dadurch gekennzeichnet, dass**
die Drahtlos-Basisstation (200) des Weiteren Folgendes umfasst:
eine Überleitungs-Steuereinheit (203) zum Überleiten eines Zustands des Drahtlos-Endgeräts (300) - während das Drahtlos-Endgerät (300) die Drahtloskommunikation mit der Drahtlos-Basisstation (200) in dem Zustand ausführt - in einen Änderungszustand, in dem eine Frequenz, die zwischen der Drahtlos-Basisstation (200) und dem Drahtlos-Endgerät (300) verwendet wird, geändert wird, während eine Kommunikationsverbindung zwischen der Drahtlos-Basisstation (200) und dem Drahtlos-Endgerät (300) aufrecht erhalten wird, wenn die Funkstörung detektiert wird, wobei der Änderungszustand ein Cell Paging Channel-Zustand oder ein Cell Forward Access Channel-Zustand ist.

2. Drahtlos-Basisstation (200) nach Anspruch 1, wobei die Überleitungs-Steuereinheit (203) des Weiteren dafür geeignet ist, den Zustand des Drahtlos-Endgerätes (300) - während das Drahtlos-Endgerät (300) die Drahtloskommunikation mit der Drahtlos-Basisstation (200) in dem Zustand ausführt - in den Änderungszustand überzuleiten, indem eine Radio Resource Control: Physical Channel Reconfiguration-Meldung an das Drahtlos-Endgerät (300) gesendet wird.

3. Drahtlos-Basisstation (200) nach Anspruch 2, wobei
die Überleitungs-Steuereinheit (203) des Weiteren dafür geeignet ist, die Radio Resource Control-Meldung, die Änderungsinformationen enthält - wobei die Änderungsinformationen eine Frequenz nach der Änderung und/oder eine Änderungszeitsteuerung der Frequenz anzeigen - an das Drahtlos-Endgerät (300) zu senden.

4. Kommunikationsverfahren in einer Drahtlos-Basisstation (200) zum Ausführen einer Drahtloskommunikation mit einem Drahtlos-Endgerät (300),
wobei das Kommunikationsverfahren Folgendes umfasst:
einen Detektionsprozess zum Detektieren einer Funkstörung zwischen der Drahtlos-Basisstation (200a) und einer anderen Drahtlos-Basisstation (200b); und
**dadurch gekennzeichnet, dass**
das Kommunikationsverfahren des Weiteren Folgendes umfasst:
einen Überleitungsprozess zum Überleiten eines Zustands des Drahtlos-Endgeräts (300) - während das Drahtlos-Endgerät (300) die Drahtloskommunikation mit der Drahtlos-Basisstation (200) in dem Zustand ausführt - in einen Änderungszustand, in dem eine Frequenz, die zwischen der Drahtlos-Basisstation (200) und dem Drahtlos-Endgerät (300) verwendet wird, geändert wird, während eine Kommunikationsverbindung zwischen der Drahtlos-Basisstation (200) und dem Drahtlos-Endgerät (300) aufrecht erhalten wird, wenn die Funkstörung detektiert wird, wobei der Änderungszustand ein Cell Paging Channel-Zustand oder ein Cell Forward Access Channel-Zustand ist.

5. Drahtloskommunikationssystem (1), das eine Drahtlos-Basisstation (200) nach einem der Ansprüche 1 bis 3 zum Ausführen einer Drahtloskommunikation mit einem Drahtlos-Endgerät (300) umfasst.

## Revendications

1. Station de base sans fil (200) pour la réalisation d'une communication sans fil avec un terminal sans fil (300),
la station de base sans fil (200) comprenant :
un détecteur (202) pour la détection d'interférences radio entre la station de base sans fil (200a) et une autre station de base sans fil (200b) ; et
**caractérisée en ce que**
la station de base sans fil (200) comprend en outre :
un contrôleur de transition (203) pour faire subir une transition d'état au terminal sans fil (300), le terminal sans fil (300) réalisant la communication sans fil avec la station de base sans fil (200) dans ledit état, vers un état de changement dans lequel une fréquence utilisée entre la station de base sans fil (200) et le terminal sans fil (300) est changée tandis qu'une connexion de communication entre la station de base sans fil (200) et le terminal sans fil (300) continue à être établie, lors de la détection des interférences radio, où l'état de changement est un état de Canal de Radiorecherche de Cellule ou un état de Canal d'Accès vers l'Avant à une Cellule.

2. Station de base sans fil (200) selon la revendication 1, dans lequel
le contrôleur de transition (203) est en outre conçu pour faire subir une transition d'état au terminal sans fil (300), le terminal sans fil (300) réalisant la communication sans fil avec la station de base sans fil (200) dans ledit état, vers l'état de changement, en transmettant un message de Commande de Ressources Radio : Reconfiguration de Canal Physique au terminal sans fil (300).

3. Station de base sans fil (200) selon la revendication 2, dans lequel
le contrôleur de transition (203) est en outre conçu pour transmettre le message de Commande de Ressources Radio incluant des informations de changement, les informations de changement indiquant au moins l'un d'une fréquence après changement et d'un instant de changement de la fréquence, au terminal sans fil (300).

4. Procédé de communication dans une station de base sans fil (200) pour la réalisation d'une communication sans fil avec un terminal sans fil (300),
le procédé de communication comprenant :
une opération de détection consistant à détecter des interférences radio entre la station de base sans fil (200a) et une autre station de base sans fil (200b) ; et
**caractérisé en ce que**
le procédé de communication comprend en outre :
une opération de transition consistant à faire subir une transition d'état au terminal sans fil (300), le terminal sans fil (300) réalisant la communication sans fil avec la station de base sans fil (200) dans ledit état, vers un état de changement dans lequel une fréquence utilisée entre la station de base sans fil (200) et le terminal sans fil (300) est changée tandis qu'une connexion de communication entre la station de base sans fil (200) et le terminal sans fil (300) continue à être établie, lors de la détection des interférences radio, où l'état de changement est un état de Canal de Radiorecherche de Cellule ou un état de Canal d'Accès vers l'Avant à une Cellule.

5. Système de communication sans fil (1) comprenant une station de base sans fil (200) selon l'une quelconque des revendications 1 à 3, pour la réalisation d'une communication sans fil avec un terminal sans fil (300).
